# EUROPÄISCHE PATENTSCHRIFT

(11) **EP 3 129 261 B1**
(45) Veröffentlichungstag und Bekanntmachung des Hinweises auf die Patenterteilung: **31.01.2018**
(21) Anmeldenummer: 15713918.9
(22) Anmeldetag: 08.04.2015
(51) Int. Cl.: B60R 7/04, B60R 11/04

(54) **HALTEVORRICHTUNG FÜR EINE FOTO- ODER VIDEO-KAMERA IM INNENRAUM EINES KRAFTFAHRZEUGS**
MOUNTING DEVICE FOR A PHOTO OR VIDEO CAMERA IN A MOTOR VEHICLE INTERIOR
DISPOSITIF DE SUPPORT POUR UNE PHOTO OU UNE CAMÉRA VIDÉO DANS L'INTÉRIEUR D'UN VÉHICULE AUTOMOBILE

(30) Priorität: 09.04.2014 CH 550142014; 15.04.2014 CH 581142014; 27.04.2014 CH 632142014; 13.05.2014 CH 732142014; 20.11.2014 CH 17932014
(43) Veröffentlichungstag der Anmeldung: 15.02.2017
(73) Patentinhaber: Kinetix AG, 8750 Glarus (CH)
(72) Erfinder: ACKERET, Peter, 8048 Zuerich (CH); KELLER, Michael Andreas, 72250 Freudenstadt (DE); FISCHER, Andreas Wolfgang, 72119 Ammerbuch (DE)
(74) Vertreter: DREISS Patentanwälte PartG mbB
(86) Internationale Anmeldenummer: PCT/EP2015/057616
(87) Internationale Veröffentlichungsnummer: WO 2015/155239

(56) Entgegenhaltungen:
- WO-A1-2011/101083
- WO-A1-2012/059979
- CN-A- 101 259 837
- DE-U1- 20 310 326
- DE-U1-202006 015 442
- DE-U1-202008 010 276
- US-A1- 2002 175 254
- US-A1- 2005 140 191
- US-A1- 2012 312 847
- US-B1- 8 678 680

## Beschreibung

Die Erfindung betrifft eine Haltevorrichtung für eine Foto- oder Video-Kamera im Innenraum eines Kraftfahrzeugs.

Kameras, insbesondere für Videoaufnahmen, erfreuen sich grosser Beliebtheit und werden für vielfältige Zwecke - insbesondere beim Sport - verwendet. Die Kameras sind sehr kompakt gebaut und sehr leicht und produzieren Filme in hoher Qualität, die entweder in der Kamera gespeichert und später betrachtet werden oder "live" auf einen entsprechend ausgerüsteten Monitor übertragen werden können.

Auch für Fahrzeuge werden solche Kameras im Innenraum oder auf der Aussenseite angeordnet verwendet beispielsweise zum Aufzeichnen von Verkehrssituationen als Beweismittel bei Gefährdungen oder Unfällen oder für Aufnahmen von erlebnisreichen Fahrten und attraktiven Gegenden.

Die Befestigungen solcher Kameras erfolgt meist mit Saugnäpfen auf der Innenseite von Windschutzscheiben oder mit Schraubverbindungen an Karosserie- oder Innenverkleidungsteilen der Fahrzeuge.

Dies ist aufwendig und ermöglicht je nach Befestigungsort nur Aufnahmen bestimmter Objekte. Zudem besteht die Gefahr von Verletzungen von Passagieren bei Unfällen.

Aus der WO 01/70539 ist eine Haltevorrichtung für Kamera bekannt, die an einer Kopfstützenhalterung befestigt wird. Die DE 20 2006 015 442 U1 zeigt Merkmale des Oberbegriffs des Anspruchs 1.

Aufgabe der Erfindung ist eine Haltevorrichtung für eine Foto- oder Video-Kamera im Innenraum eines Kraftfahrzeugs zu schaffen die einfach und schnell in unterschiedlichen Fahrzeugen ein- und ausgebaut und für vielfältige Aufnahmen unterschiedlicher Objekte eingestellt werden kann. Zudem soll die Haltevorrichtung die Kamera vor Beschädigungen und Verunreinigungen und die Passagiere vor Verletzungen bei Unfällen schützen.

Diese Aufgabe wird durch eine Haltevorrichtung für eine Foto- oder Video-Kamera im Innenraum eines Kraftfahrzeugs mit den Merkmalen des Anspruchs 1 gelöst. Weiterbildungen der Erfindung sind in den abhängigen Ansprüchen definiert.

Gemäss der Erfindung ist es möglich, die Haltevorrichtung an Fahrzeugsitzteilen wie eine Rückenlehne, Kopfstütze oder Kopfstützenhalterung eines Fahrzeugsitzes für Fahrer- oder Beifahrer zu befestigen und die Kamera durch Drehen des Trägerarms um ein Drehgelenk mit vertikal ausgerichteter Drehachse in unterschiedlichen Stellungen auf beiden Seiten der Fahrzeugsitze zu positionieren. Dies ermöglicht eine vielfältige Verwendung der Kamera für Innen- und Aussenaufnahmen bspw. zur Überwachung von Kindern auf den Rücksitzen oder des "toten Winkels" beim Rückspiegel oder für Aufnahmen durch die Frontscheibe mit gleichzeitiger Beobachtung von Fahrer und Instrumenten.

In einer bevorzugten Ausführungsform ist die Befestigungseinrichtung an den Kopfstützenstangen einer Kopfstützenhalterung angebracht und der Trägerarm über ein Drehgelenk mit einer vertikal ausgerichteten Drehachse mit der Befestigungseinrichtung verbunden.

Erfindungsgemäß sind die Befestigungseinrichtung und der Trägerarm über ein Doppelgelenk mit einem ersten Drehgelenk mit einer horizontal und parallel zur Ebene der Rückenlehne ausgerichteten Drehachse und einem zweiten Drehgelenk mit einer vertikal ausgerichteten Drehachse verbunden, so dass die Drehachse des zweiten Drehgelenks auch bei Schrägstellung der Rückenlehne vertikal ausgerichtet werden kann. Anstelle eines Doppelgelenks kann auch ein Kugelgelenk vorgesehen werden.

Erfindungsgemäß ist die vertikal ausgerichtete Drehachse des Doppelgelenks in etwa mittig bezüglich Fahrzeugsitzteil angeordnet und der Trägerarm in einer in etwa horizontalen Ebene um ca. 180° zwischen zwei Endlagen in denen der Trägerarm mit seiner Längsachse in etwa parallel zur Breitseite der Rückenlehne ausgerichtet ist schwenkbar. Dies ermöglicht die Verwendung der Haltevorrichtung an linken und rechten Fahrzeugsitzen sowie ein Schwenken der Kamera auf die linke oder rechte Seite der Sitze.

In einer bevorzugten Weiterbildung ist der Trägerarm in den beiden Endstellungen und ggf. in Zwischenstellungen, insbesondere der 90° Mittelstellung, feststellbar und kann mit einer Lösetaste entriegelt werden. Vorzugsweise ist zudem eine Friktionsbremse für die Bewegung des Trägerarms zwischen den Rastpositionen vorgesehen.

In einer weiteren bevorzugten Ausführungsform ist am Trägerarm ein Höhenversatz oder eine einstellbare Höhenverstellung am Drehgelenk oder an der Halterung vorgesehen, so dass die Kamera (ggf. einstellbar) höher als die Befestigungseinrichtung positioniert ist.

Ebenso ist es vorteilhaft, wenn die Länge des Trägerarms verstellbar ist.

Erfindungsgemäß ist der Trägerarm über eine lösbare Kupplung mit der Befestigungseinrichtung verbunden. Vorzugsweise umfasst diese Kupplung eine im oder am Fahrzeugsitzteil angeordnete Aufnahmebuchse und ein am Trägerarm angeordnetes Steckelement das in die Aufnahmebuchse eingesteckt und mit einer manuell lösbaren Verriegelungseinrichtung gesichert wird. Dabei ist das Drehgelenk vorzugsweise zwischen dem Trägerarm und dem Steckelement angeordnet.

In einer bevorzugten Weiterbildung ist die Aufnahmebuchse an einem Träger angeordnet der an einer oder beiden Kopfstützenstangen einer Kopfstützenhalterung befestigt ist.

In einer bevorzugten Weiterbildung können das Steckelement und der Trägerarm um das Drehgelenk in eine platzsparende Aufbewahrungsstellung übereinander gedreht werden.

Erfindungsgemäß ist die Halterung über ein Doppelgelenk oder ein Kugelgelenk mit Trägerarm verbunden, so dass die Halterung um eine vertikal ausgerichtete Drehachse gedreht und um eine horizontal ausgerichtete Schwenkachse geneigt werden kann. Vorzugsweise sind die Einstellungen über Friktionsbremsen feststellbar.

In einer weiteren bevorzugten Ausführungsform umfasst die Halterung ein Schutzgehäuse in dem die Kamera aufgenommen ist. Vorzugsweise ist das Schutzgehäuse über eine ggf. mit einem Deckel verschliessbare Öffnung zugänglich und mit Haltemitteln für unterschiedliche Kameras versehen. Bevorzugt sind weitere Öffnungen für das Objektiv und Bedienelemente der Kamera am Schutzgehäuse vorgesehen.

In einer weiteren bevorzugten Ausführungsform ist der Trägerarm mit einem ersten Doppelgelenk mit senkrecht zueinander ausgerichteten Drehachsen mit der Befestigungseinrichtung und mit einem zweiten Doppelgelenk mit senkrecht zueinander ausgerichteten Drehachsen mit der Halterung verbunden, wobei bei den Doppelgelenken jeweils eine Drehachse vertikal und eine Drehachse horizontal verläuft und wobei die beiden horizontal ausgerichteten Drehachsen parallel verlaufen. An Stelle von Doppelgelenken können auch Kugelgelenke verwendet werden.

In einer weiteren bevorzugten Ausführungsform kann der Trägerarm auch über Viergelenke mit der Befestigungseinrichtung und mit der Halterung verbunden werden, so dass beim Verstellen der Neigung des Trägerarms die Halterung horizontal ausgerichtet bleibt.

Es versteht sich, dass an allen Gelenken kraft- oder formschlüssige Bremsen oder Rastvorrichtungen, bspw. mit Verzahnungen und Feststell-Schrauben oder gefederten Löseknöpfen, angeordnet sein können.

Weitere Vorteile und Ausgestaltungen der Erfindung ergeben sich aus der Beschreibung und den beiliegenden Zeichnungen.

Es versteht sich, dass die vorstehend genannten und nachstehend noch zu erläuternden Merkmale nicht nur in der jeweils angegebenen Kombination sondern auch in anderen Kombinationen oder in Alleinstellung verwendbar sind ohne den Rahmen der vorliegenden Erfindungen zu verlassen. Dies gilt insbesondere auch für die Merkmale der nachfolgend beschriebenen sechs Ausführungsbeispiele, die je nach Anwendung und Platzverhältnissen unterschiedlich kombinierbar sind.

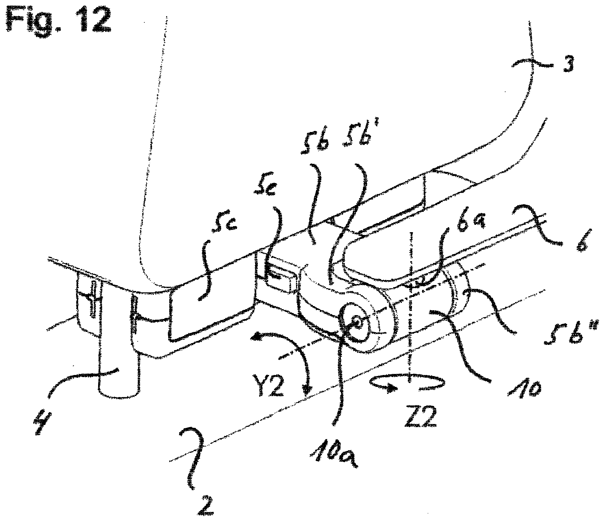

Nachstehend werden Ausführungsbeispiele unter Bezugnahme auf die entsprechenden Zeichnungen näher erläutert, wobei die Erfindung in Figur 12 offenbart ist.
Fig. 1 zeigt eine Perspektivansicht einer ersten Ausführungsform der Haltevorrichtung mit in die Halterung eingesetzter Kamera.
Fig. 2 zeigt eine Perspektivansicht der Haltevorrichtung gemäss Darstellung in Fig. 1 mit aus der Halterung entnommener Kamera.
Fig. 3 zeigt eine Perspektivansicht der mit einer Befestigungseirichtung an der Kopfstützenhalterung befestigten Haltevorrichtung gemäss Darstellung in Fig.1 in der ersten Endlage des Trägerarms.
Fig. 4 zeigt eine Perspektivansicht der mit einer Befestigungseinrichtung an der Kopfstützenhalterung befestigten Haltevorrichtung gemäss Darstellung in Fig. 1 in der zweiten Endlage des Trägerarms.
Fig.5 zeigt eine Perspektivansicht einer zweiten Ausführungsform der Haltevorrichtung mit einem in der Länge verstellbaren Trägerarm.
Fig. 6 zeigt eine dritte Ausführungsform der Haltevorrichtung mit einem in der Länge verstellbaren Trägerarm sowie einem in der Höhe verstellbaren Stützelement.
Fig. 7 zeigt eine vierte Ausführungsform der Haltevorrichtung mit einem ausziehbaren Trägerarm der mit je einem Gelenk mit horizontaler Drehachse mit dem Steckelement und der Halterung verbunden ist, in einer zusammengeklappten Aufbewahrungsstellung mit eingefahrenem Trägerarm.
Fig. 8 zeigt die Haltevorrichtung gemäss Darstellung in Fig. 7 in einer ausgeklappten Gebrauchsstellung mit eingefahrenem Trägerarm in einer horizontalen Gebrauchsstellung mit einer in die Halterung eingesetzten Kamera.
Fig. 9 zeigt die Haltevorrichtung gemäss Darstellung in Fig. 8 gekuppelt mit einer am Fahrzeugsitz angeordneten Befestigungseinrichtung mit ausgefahrenem Trägerarm in einer schrägen Gebrauchsstellung.
Fig. 10 zeigt eine fünfte Ausführungsform der Haltevorrichtung mit einem ausziehbaren Trägerarm und einem am Trägerarm angelenkten Stützelement und einer am Stützelement angelenkten Trägerplattform für die Halterung in der Gebrauchsstellung.
Fig. 11 zeigt die Haltevorrichtung gemäss Darstellung in Fig. 11 in einer zusammengeklappten Aufbewahrungsstellung.
Fig. 12 zeigt eine Perspektivansicht der Befestigungseinrichtung mit eingestecktem Steckelement sowie einem Doppelgelenk über das der Trägerarm mit dem Steckelement verbunden ist.

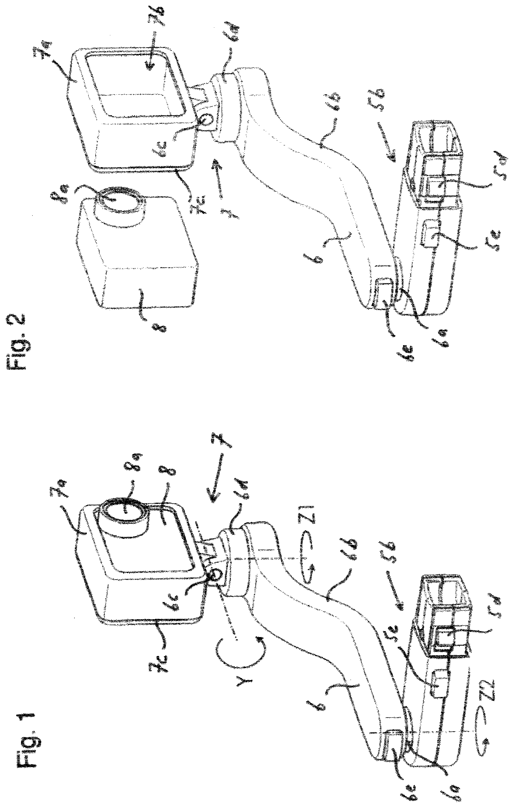

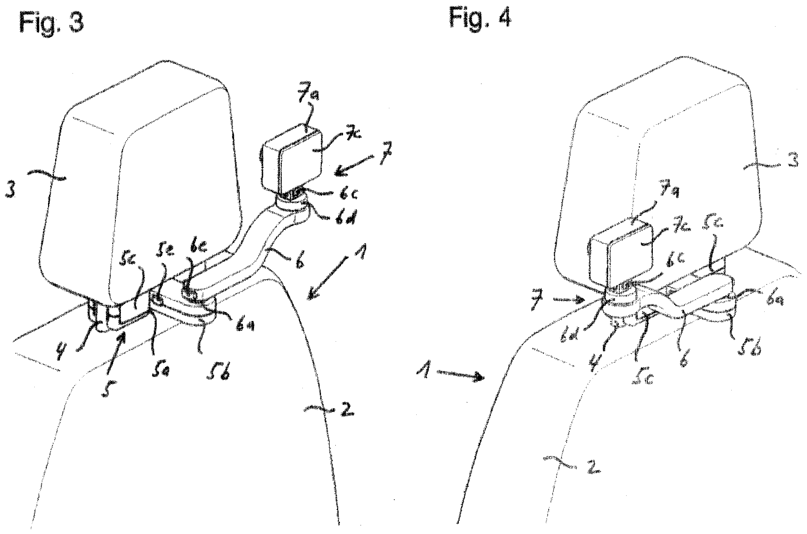

Fig. 1 und 2 zeigen eine erste Ausführungsform der Haltevorrichtung ohne Befestigungseinrichtung am Fahrzeugsitz. An einem Ende des Trägerarms 6 ist das Steckelement 5b über ein erstes Drehgelenk 6a mit dem Trägerarm 6 verbunden. Die Drehachse Z2 des ersten Drehgelenks 6a ist in etwa vertikal ausgerichtet, so dass der Trägerarm 6 in einer im Wesentlichen horizontalen Ebene zwischen seinen beiden Endlagen in etwa 180° schwenkbar ist (Fig. 3 und 4). In den beiden Endlagen schliessen der Trägerarm 6 und das Steckelement 5b jeweils einen Winkel von etwa 90° ein und werden mit einer (nicht dargestellten) Verriegelung blockiert. Diese Verriegelung kann über die Lösetaste 6e gelöst werden. Zur platzsparenden Aufbewahrung können das Steckelement 5b und der Trägerarm 6 übereinander geschwenkt werden.

Am anderen Ende des Trägerarms 6 ist die Halterung 7 zur Aufnahme der Kamera 8 angeordnet. Die Halterung 7 umfasst ein Schutzgehäuse 7a in dem die Kamera 8 aufgenommen wird. Das Schutzgehäuse 7a soll einerseits die Kamera 8 vor Beschädigungen und Verschmutzungen und anderseits die Passagiere vor möglichen Verletzungen bei Unfällen schützen.

Das Schutzgehäuse 7a ist über ein Doppelgelenk 6c, 6d mit senkrecht zueinander stehenden Drehachsen Z1 und Y mit dem Trägerarm 6 verbunden und kann mit der Kamera 8 um die vertikale Drehachse Z1 360° gedreht und um die horizontale Drehachse Y in die gewünschte Stellung geneigt werden.

Die Rückwand 7c des Schutzgehäuses 7a lässt sich zum Einsetzen und Entnehmen der Kamera 8 öffnen. In der gegenüberliegenden Frontwand ist eine Öffnung 7b vorgesehen, durch welche das Objektiv 8a der Kamera 8 hindurchragt und die Bedienelemente der Kamera 8 zugänglich sind. Die Kanten der Kamera 8 sind vom Schutzgehäuse 7a allseitig abgedeckt und so die Passagiere bei einem Unfall vor Verletzungen geschützt.

Am Trägerarm 6 ist ein Höhenversatz 6b vorgesehen so dass das Ende an dem die Halterung 7 angeordnet ist höher liegt als das Ende an dem das Steckelement 5b angelenkt ist.

Fig. 3 und 4 zeigen wie die in Fig. 1 und 2 beschriebene Haltevorrichtung an einem Fahrzeugsitz 1 befestigt werden kann.

An den zwischen der Rückenlehne 2 und der Kopfstütze 3 angeordneten Kopfstützenstangen der Kopfstützenhalterung 4 ist ein Träger 5c mit einer mittig angeordneten Aufnahmebuchse 5a befestigt in welche das Steckelement 5 eingesteckt und mit den beidseitig angeordneten Rasthaken 5d verriegelt werden kann. Die Verriegelung kann über die beidseitig am Steckelement 5b angeordneten Entriegelungstasten 5e gelöst und das Steckelement 5b aus der Aufnahmebuchse 5a herausgezogen werden.

Der Träger 5c kann von vorne oder von hinten an der Kopfstützenhalterung 4 befestigt werden, so dass die Haltevorrichtung je nach Bedürfnis auf der Vorder- oder der Rückseite der Rückenlehne 2 angeordnet werden kann.

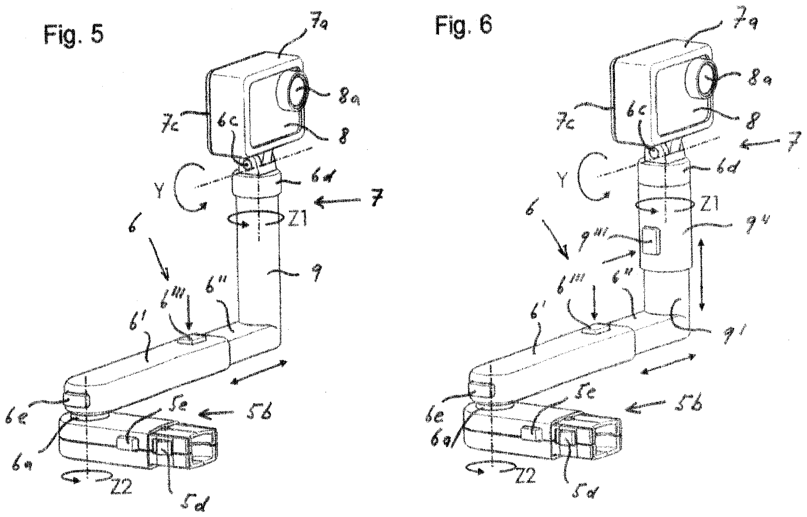

Fig. 5 zeigt eine zweite Ausführungsform der Haltevorrichtung mit einem in der Länge verstellbaren Trägerarm 6', 6", umfassend ein erstes Segment 6', welches über das erste Drehgelenk 6a mit dem Steckelement 5b verbunden ist und ein zweites Segment 6", welches teleskopisch im ersten Segment 6' geführt ist.

Die beiden Segmente 6', 6", lassen sich mit einer (nicht dargestellten) Verriegelungsvorrichtung in der gewünschten Position festlegen, wobei eine Lösetaste 6''' vorgesehen ist, um die Verriegelung zu lösen.

Am Ende des zweiten Segments 6" ist ein sich vertikal nach oben erstreckendes Stützelement 9 angeordnet an dessen oberem Ende das Doppelgelenk 6d, 6c der Halterung 7 angeordnet ist.

Der Trägerarm 6', 6" und das Stützelement 9 mit der Halterung 7 lassen sich so stufenlos auf die gewünschte Länge ausziehen und lösbar festlegen.

Fig. 6 zeigt eine dritte Ausführungsform der Haltevorrichtung mit einem in der Länge verstellbaren Trägerarm 6', 6" gemäss Ausführungsform in Fig. 5 sowie einem in der Höhe verstellbaren Stützelement 9', 9", umfassend ein am Ende des zweiten Segments 6" des Trägerarms 6', 6" angeordnetes sich vertikal nach oben erstreckendes erstes Segment 9' und ein im ersten Segment 9' teleskopisch geführtes zweites Segment 9".

Die beiden Segmente 9', 9" lassen sich mit einer (nicht dargestellten) Verriegelungsvorrichtung in der gewünschten Position festlegen, wobei eine Lösetaste 9''' vorgesehen ist, um die Verriegelung zu lösen.

Das Stützelement 9', 9" und mit ihm die am oberen Ende des zweiten Segments 9" angeordnete Halterung 7 lassen sich so stufenlos auf die gewünschte Höhe ausziehen und lösbar festlegen.

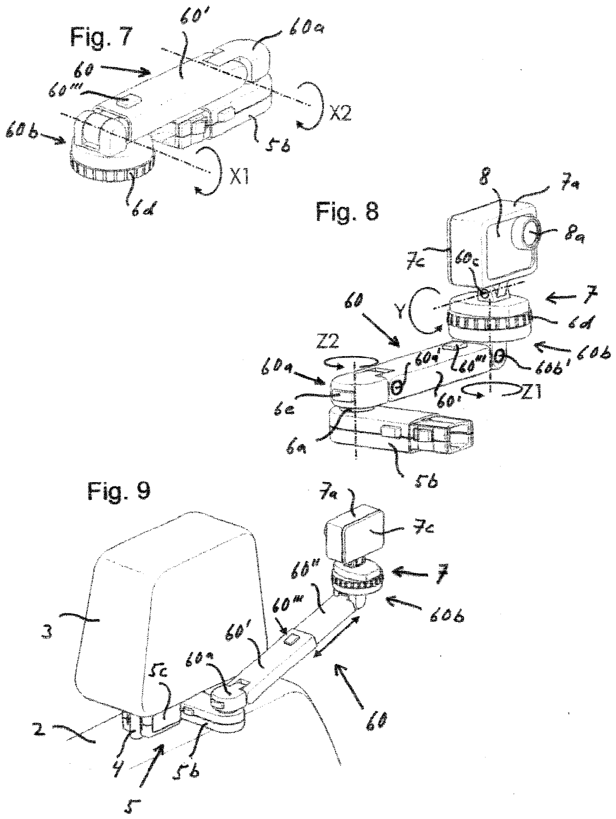

Fig. 7 bis 9 zeigen eine vierte Ausführungsform der Haltevorrichtung mit einem ausziehbaren Trägerarm 60, 60', 60" der mit einem Doppelgelenk 60a mit dem Steckelement 5b und mit einem Doppelgelenk 60b mit der Halterung 7 verbunden ist.

Das Doppelgelenk 60a umfasst das erste Drehgelenk 6a mit vertikal ausgerichteter Drehachse Z2 sowie das Drehgelenk 60a' mit horizontal ausgerichteter Drehachse X2.

Das Doppelgelenk 60b umfasst das Drehgelenk 6d mit vertikal ausgerichteter Drehachse Z1 sowie das Drehgelenk 60b' mit horizontal ausgerichteter Drehachse X1.

Die beiden horizontal ausgerichteten Drehachsen X1 und X2 der Gelenke 60b' und 60a' verlaufen parallel zueinander.

Das Drehgelenk 6d ist als runde Plattform ausgebildet deren Mantelfläche eine Riffelung und ggf. eine Skala zum Einstellen des Drehwinkels aufweist.

Auf der Plattform des Drehgelenkes 6d ist das Schutzgehäuse 7a zur Aufnahme der Kamera 8 über das Drehgelenk 60c neigbar angeordnet.

Der Trägerarm 60 umfasst die beiden teleskopisch ineinander geführten Segmente 60' und 60", die in einer gewünschten Auszugsposition mit einer (nicht dargestellten) Rastvorrichtung fixiert und mit der Lösetaste 60''' gelöst werden kann.

Zur platzsparenden Aufbewahrung können das Steckelement 5b und der eingefahrene Trägerarm 60 um das erste Drehgelenk 6a übereinander geschwenkt und die Halterung 7 um das Drehgelenk 60b' 180° nach unten geschwenkt werden (Fig. 7).

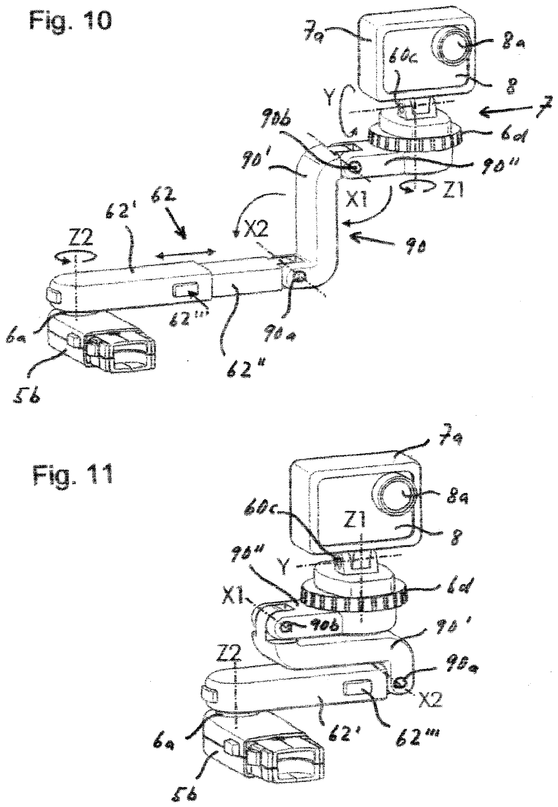

Fig. 10 und 11 zeigen eine fünfte Ausführungsform der Haltevorrichtung. Der Trägerarm 62 umfasst ein erstes Segment 62' und ein im ersten Segment 62' teleskopisch geführtes zweites Segment 62" welches nach Betätigen der Lösetaste 62''' verstellbar ist.

Das erste Segment 62' ist am hinteren Ende über das erste Drehgelenk 6a mit senkrechter Drehachse Z2 mit dem Steckelemente 5b verbunden und das zweite Segment 62" ist am vorderen Ende über ein zweites Drehgelenk 90a mit horizontaler Drehachse X2 mit dem unteren Ende eines im Wesentlichen vertikal ausgerichteten ersten Segments 90' des Stützelementes 90 verbunden (Fig. 10).

Am oberen Ende des ersten Segments 90' ist über ein drittes Drehgelenk 90b mit horizontaler Drehachse X1 ein zweites im Wesentlichen horizontal ausgerichtetes Segment 90" angeordnet welches eine Plattform für die Halterung 7 bildet (Fig.10).

Die Drehachsen X1 des dritten Drehgelenks 90b und X2 des zweiten Drehgelenks 90a verlaufen parallel zueinander, so dass das erste und das zweite Segment 90', 90" des Stützelements 90 und der Trägerarm 62 parallel übereinander geklappt werden können (Fig. 11).

Das zweite Drehgelenk 90a und das dritte Drehgelenk 90b sind als Friktionsgelenke ausgebildet und die Öffnungswinkel von 90° durch Anschläge begrenzt.

Fig. 12 Fig. zeigt eine Verbindung zwischen dem Steckelement 5b, 5b', 5b" und dem Trägerarm 6 über ein Doppelgelenk 10. Das Doppelgelenk 10 umfasst das erste Drehgelenk 6a mit vertikal ausgerichteter Drehachse Z2 sowie ein zweites Drehgelenk 10a mit horizontal ausgerichteter Drehachse Y2.

Das zweite Drehgelenk 10a ist in einer am Ende des Steckelements 5b angeordneten Gabel 5b',5b" gelagert und mit einer (nicht dargestellte) Reibungsbremse versehen, so dass eine stufenlose Anpassung der vertikalen Ausrichtung der Drehachse Z2 des ersten Drehgelenks (6a) an die Neigung der Rückenlehne (2) gewährleistet ist.

## Patentansprüche

1. Haltevorrichtung einer Foto- oder Video-Kamera im Innenraum eines Kraftfahrzeugs, mit einer Befestigungseinrichtung (5, 5a, 5b, 5c, 5d, 5e) an einem Fahrzeugsitzteil, wie eine Rückenlehne (2) Kopfstütze (3) oder Kopfstützenhalterung (4) eines Fahrzeugsitzes (1) angebracht, und einem in etwa horizontal und parallel zur Breitseite der Rückenlehne (2) ausgerichteten Trägerarm (6, 6', 6", 60, 60', 60", 62, 62', 62") an dessen einem Ende eine Halterung (7) zur Aufnahme einer Kamera (8) angeordnet ist, wobei der Trägerarm (6, 6', 6", 60, 60', 60", 62, 62', 62") das Fahrzeugsitzteil (2, 3, 4) soweit überragt, dass das Objektiv (8a) einer am Trägerarm gehalterten Kamera (8) freie Sicht in Fahrtrichtung nach vorne und/oder in Gegenfahrtrichtung nach hinten hat, wobei der Trägerarm (6, 6', 6", 60, 60', 60", 62, 62', 62") über eine lösbare Kupplung (5a, 5b, 5d, 5e) mit der Befestigungseinrichtung (5, 5a, 5b, 5c, 5d, 5e,) verbunden ist, wobei der Trägerarm (6, 6', 6", 60, 60', 60", 62, 62', 62") an seinem anderen Ende über ein erstes Drehgelenk (6a) mit einer in etwa vertikal ausgerichteten Drehachse Z2 mit der Befestigungseinrichtung (5, 5a, 5b ,5c, 5d, 5e) verbunden und in einer in etwa horizontalen Ebene schwenkbar ist, **dadurch gekennzeichnet dass** die Drehachse Z2 in etwa mittig bezüglich der Breitseite der Rückenlehne (2) angeordnet ist und der Trägerarm (6, 6', 6", 60, 60', 60", 62, 62', 62") um etwa 180° zwischen zwei Endlagen um die Drehachse Z2 schwenkbar und in den beiden Endlagen in etwa parallel zur Breitseite der Rückenlehne (2) ausgerichtet ist, so dass eine am Trägerarm (6, 6', 6", 60, 60', 60", 62, 62', 62") gehalterte Kamera (8) auf eine linke oder rechte Seite des Fahrzeugsitzteils (2, 3, 4) verschwenkt werden kann, wobei zwischen dem ersten Drehgelenk (6a) und der Befestigungseinrichtung (5, 5a, 5b, 5c, 5d, 5e) ein zweites Drehgelenk (10a) mit einer in etwa horizontal und parallel zur Ebene der Rückenlehne (2) ausgerichteten Drehachse Y2 vorgesehen ist, mit dem die Drehachse Z2 des ersten Drehgelenks (6a) bei Schrägstellung der Rückenlehne (2) senkrecht ausgerichtet werden kann.

2. Haltevorrichtung nach Anspruch 1, **dadurch gekennzeichnet, dass** der Trägerarm (6, 6', 6", 60, 60', 60", 62, 62', 62"), insbesondere in den beiden Endlagen und/oder der Mittelstellung von 90°, lösbar feststellbar ist.

3. Haltevorrichtung nach Anspruch 1 oder 2, **dadurch gekennzeichnet, dass** das erste Drehgelenk (6a) mit vertikal ausgerichteter Drehachse Z2 und das zweite Drehgelenk (10a) mit horizontal ausgerichteter Drehachse Y2 ein Doppelgelenk (10) bilden.

4. Haltevorrichtung nach einem der Ansprüche 1 bis 3, **dadurch gekennzeichnet, dass** der Trägerarm (6, 6', 6", 60, 60', 60", 62, 62', 62") einen Höhenversatz (6b, 61b) aufweist, so dass die Halterung (7) höher als die Befestigungseinrichtung (5, 5a, 5b, 5c, 5d, 5e,) liegt.

5. Haltevorrichtung nach einem der Ansprüche 1 bis 4, **dadurch gekennzeichnet, dass** die lösbare Kupplung (5a, 5b, 5d, 5e) eine an der Befestigungseinrichtung (5, 5a, 5b, 5c, 5d, 5e,) angeordnete Aufnahmebuchse (5a) und ein am Trägerarm (6, 6', 6", 60, 60', 60", 62, 62', 62") angeordnetes Steckelement (5b) sowie eine lösbare Verriegelungseinrichtung (5d, 5e) umfasst.

6. Haltevorrichtung nach Anspruch 5, **dadurch gekennzeichnet, dass** die Aufnahmebuchse (5a) in oder an der Rückenlehne (2) in etwa mittig angeordnet ist.

7. Haltevorrichtung nach Anspruch 5 oder 6, **dadurch gekennzeichnet, dass** die Aufnahmebuchse (5a) an einem an der Kopfstützenhalterung (4) angeordneten Träger (5c) angeordnet ist.

8. Haltevorrichtung nach Anspruch 7, wobei der Träger (5c) an den beiden Kopfstützenstangen der Kopfstützenhalterung (4) befestigt und die Aufnahmebuchse (5a) in etwa mittig zwischen den Kopfstützenstangen (4) angeordnet sind.

9. Haltevorrichtung nach einem der vorherigen Ansprüche, wobei die Kamera (8) über eine lösbare Kupplung mit der Halterung (7) verbunden ist.

10. Haltevorrichtung nach einem der vorherigen Ansprüche, wobei die Halterung (7) ein Schutzgehäuse (7a) zur Aufnahme der Kamera (8) umfasst.

11. Haltevorrichtung nach 10, wobei das Schutzgehäuse (7a) eine lösbare Befestigungsvorrichtung für die Kamera (8) umfasst.

12. Haltevorrichtung nach Anspruch 10 oder 11, wobei am Schutzgehäuse (7a) Öffnungen (7b) für das Objektiv (8a) und die Bedienelemente der Kamera (8) vorgesehen sind.

13. Haltevorrichtung nach einem der Ansprüche 5 bis 12, wobei der Trägerarm (6, 6', 6", 60, 60', 60", 62, 62', 62") und das Steckelement (5b) um die Drehachse Z2 des ersten Drehgelenks (6a) in eine platzsparende Aufbewahrungsstellung übereinander schwenkbar sind.

14. Haltevorrichtung nach einem der vorherigen Ansprüche, wobei die Doppelgelenke (6c, 6d, 60a, 60b, 60c,10,) durch Kugelgelenke gebildet werden.

## Claims

1. A retaining device of a still or video camera in the interior of a motor vehicle, comprising a fastening device (5, 5a, 5b, 5c, 5d, 5e) attaching the retaining device to a vehicle seat part, such as a backrest (2), headrest (3), or headrest holder (4) of a vehicle seat (1), and a carrier arm (6, 6', 6", 60, 60', 60", 62, 62', 62") which is oriented approximately horizontally and parallel with respect to the broad side of the backrest (2) and at one end of which a holder (7) is arranged for receiving a camera (8), wherein the carrier arm (6, 6', 6", 60, 60', 60", 62, 62', 62") protrudes beyond the vehicle seat part (2, 3, 4) to such an extent that, when the camera is held at the carrier arm, the lens (8a) of the camera (8) has an uninterrupted view towards the front in the driving direction and/or towards the rear in the direction counter to the driving direction, wherein the carrier arm (6, 6', 6", 60, 60', 60", 62, 62', 62") is connected over a releasable coupling (5a, 5b, 5d, 5e) with the fastening device (5, 5a, 5b, 5c, 5d, 5e) wherein the carrier arm (6, 6', 6", 60, 60', 60", 62, 62', 62") at its other end is connected via a first rotary joint (6a) with an approximately vertically-oriented rotational axis Z2 to the fastening device (5, 5a, 5b, 5c, 5d, 5e) and can be pivoted in an approximately horizontal plane, **characterized in that**
the rotational axis Z2 is arranged approximately in the center with respect to the broad side of the backrest (2), and the carrier arm (6, 6', 6", 60, 60', 60", 62, 62', 62") is pivotable through about 180° around the rotational axis Z2 and in the two end positions, is oriented approximately parallel with respect to the broad side of the backrest (2), such that a camera (8) held at the carrier arm (6, 6', 6", 60, 60', 60", 62, 62', 62") can be pivoted to the left or right side of the vehicle seat part (2, 3, 4), wherein between the first rotary joint (6a) and the fastening device (5, 5a, 5b, 5c, 5d, 5e), a second rotary joint (10a) with a rotational Y2 axis oriented approximately horizontally and parallel to the plane of the backrest (2) is provided, with which the rotational axis Z2 of the first rotary joint (6a) can be aligned perpendicularly when the backrest (2) is in the inclined position.

2. The retaining device according to claim 1, **characterized in that** the carrier arm (6, 6', 6", 60, 60', 60", 62, 62', 62") is releasably lockable, especially in the two end positions and/or the middle position of 90°.

3. The retaining device according to claim 1 or 2, **characterized in that** the first rotary joint (6a) with vertically-oriented rotational axis Z2 and the second rotary joint (10a) with horizontally-oriented rotational axis Y2 form a double joint (10).

4. The retaining device according to any one of claims 1 through 3, **characterized in that** the carrier arm (6, 6', 6", 60, 60', 60", 62, 62', 62") has a height offset (6b, 61b), such that the holder (7) is located higher than the fastening device (5, 5a, 5b, 5c, 5d, 5e).

5. The retaining device according to any one of claims 1 through 4, **characterized in that** the releasable coupling (5a, 5b, 5d, 5e) comprises a retaining bushing (5a) arranged on the fastening device (5, 5a, 5b, 5c, 5d, 5e) and a receptacle (5b) arranged on the carrier arm (6, 6', 6", 60, 60', 60", 62, 62', 62"), as well as a releasable locking device (5d, 5e).

6. The retaining device according to claim 5, **characterized in that** the retaining bushing (5a) is arranged in or on the backrest (2) approximately in the center.

7. The retaining device according to claim 5 or 6, **characterized in that** the retaining bushing (5a) is arranged on a carrier (5c) arranged on the headrest holder (4).

8. The retaining device according to claim 7, wherein the carrier (5c) is fastened to the two headrest posts of the headrest holder (4), and the retaining bushing (5a) is arranged approximately centrally between the headrest posts (4).

9. The retaining device according to one of the preceding claims, wherein the camera (8) is connected via a releasable coupling with the holder (7).

10. The retaining device according to one of the preceding claims, wherein the holder (7) comprises a protective housing (7a) for receiving the camera (8).

11. The retaining device according to claim 10, wherein the protective housing (7a) comprises a releasable fastening apparatus for the camera (8).

12. The retaining device according to claim 10 or 11, wherein, on the protective housing (7a), openings (7b) for the lens (8a) and the operating elements of the camera (8) are provided.

13. The retaining device according to one of claims 5 through 12, wherein the carrier arm (6, 6', 6", 60, 60', 60", 62, 62', 62") and the receptacle (5b) can be pivoted around the rotational axis Z2 of the first rotary joint (6a) in a space-saving storage position.

14. The retaining device according to one of the preceding claims, wherein the double joints (6c, 6d, 60a, 60b, 60c, 10) are formed by ball-and-socket joints.

## Revendications

1. Dispositif de retenue d'une photo ou vidéo caméra dans l'habitacle d'un véhicule, comprenant un dispositif de fixation (5, 5a, 5b, 5c, 5d, 5e), monté sur une partie de siège de véhicule, telle qu'un dossier (2), un appuie-tête (3) ou un support d'appuie-tête (4) d'un siège de véhicule (1), et un bras porteur (6, 6', 6", 60, 60', 60", 62, 62', 62") orienté essentiellement horizontalement et parallèlement au côté de la largeur du dossier (2), et à l'une des extrémités duquel est monté un support (7) de réception d'une caméra (8), le bras porteur (6, 6', 6", 60, 60', 60", 62, 62', 62") dépassant suffisamment de la partie de siège du véhicule (2, 3, 4) pour que l'objectif (8a) d'une caméra (8) retenue sur le bras porteur ait une vision libre vers l'avant dans la direction de déplacement et/ou vers l'arrière dans la direction opposée à la direction de déplacement, le bras porteur (6, 6', 6", 60, 60', 60", 62, 62', 62") étant relié au dispositif de fixation (5, 5a, 5b, 5c, 5d, 5e) par l'intermédiaire d'un accouplement amovible (5, 5a, 5b, 5c ; 5d, 5e), et étant relié à son autre extrémité, au dispositif de fixation (5, 5a, 5b, 5c, 5d, 5e) par l'intermédiaire d'une première articulation tournante (6a) ayant un axe de rotation Z2 orienté essentiellement verticalement, et étant mobile en pivotement dans un plan essentiellement horizontal,
**caractérisé en ce que**
l'axe de rotation Z2 est monté dans une position essentiellement médiane par rapport au côté de la largeur du dossier (2) et le bras porteur (6, 6', 6", 60, 60', 60", 62, 62', 62") est susceptible de pivoter d'environ 180° entre deux positions d'extrémité autour de l'axe de rotation Z2, et est orienté dans les deux positions d'extrémité essentiellement parallèlement au côté de la largeur du dossier (2), de sorte qu'une caméra (8) retenue sur le bras porteur (6, 6', 6", 60, 60', 60", 62, 62', 62") puisse être déplacée par pivotement sur le côté gauche ou sur le côté droit de la partie de siège du véhicule (2, 3, 4), entre la première articulation tournante (6a) et le dispositif de fixation (5, 5a, 5b, 5c, 5d, 5e) étant prévue une seconde articulation tournante (10a) ayant un axe de rotation Y2 orienté essentiellement horizontalement et parallèlement au plan du dossier (2), permettant d'orienter l'axe de rotation Z2 de la première articulation tournante (6a) verticalement, lorsque le dossier (2) est dans une position oblique.

2. Dispositif de retenue conforme à la revendication 1,
**caractérisé en ce que**
le bras porteur (6, 6', 6", 60, 60', 60", 62, 62', 62") peut être bloqué de manière amovible en particulier dans les deux positions d'extrémité et/ou dans la position médiane à 90°.

3. Dispositif de retenue conforme à la revendication 1 ou 2,
**caractérisé en ce que**
la première articulation tournante (6a) ayant un axe de rotation Z2 orienté verticalement et la seconde articulation tournante (10a) ayant un axe de rotation Y2 orienté horizontalement forment une double articulation (10).

4. Dispositif de retenue conforme à l'une des revendications 1 à 3,
**caractérisé en ce que**
le bras porteur (6, 6', 6", 60, 60', 60", 62, 62', 62") présente un décalage en hauteur (6b ; 61b) de sorte que le support (7) soit plus haut que le dispositif de fixation (5, 5a, 5b, 5c, 5d, 5e).

5. Dispositif de retenue conforme à l'une des revendications 1 à 4,
**caractérisé en ce que**
l'accouplement amovible (5a, 5b, 5d, 5e) comporte une douille de réception (5a) montée sur le dispositif de fixation (5, 5a, 5b, 5c, 5d, 5e) et un élément d'enfichage (5b) monté sur le bras porteur (6, 6', 6", 60, 60', 60", 62, 62', 62") ainsi qu'un dispositif de verrouillage amovible (5d, 5e).

6. Dispositif de retenue conforme à la revendication 5,
**caractérisé en ce que**
la douille de réception (5a) est montée dans une position essentiellement médiane dans ou sur le dossier (2).

7. Dispositif de retenue conforme à la revendication 5 ou 6,
**caractérisé en ce que**
la douille de réception (5a) est montée sur un support (5c) monté sur le support de l'appuie-tête (4).

8. Dispositif de retenue conforme à la revendication 7,
dans lequel le support (5c) est fixé sur les deux tiges du support de l'appuie-tête (4), et la douille de réception (5a) est montée dans une position essentiellement médiane entre les tiges d'appuie-tête (4).

9. Dispositif de retenue conforme à l'une des revendications précédentes, dans lequel la caméra (8) est reliée au support (7) par l'intermédiaire d'un accouplement amovible.

10. Dispositif de retenue conforme à l'une des revendications précédentes, dans lequel le support (7) comporte un boîtier de protection (7a) pour recevoir la caméra (8).

11. Dispositif de retenue conforme à la revendication 10,
dans lequel le boîtier de protection (7a) comporte un dispositif de fixation amovible de la caméra (8).

12. Dispositif de retenue conforme à la revendication 10 ou 11,
dans lequel il est prévu, sur le boîtier de protection (7a) des ouvertures (7b) pour l'objectif (8a) et les éléments de manoeuvre de la caméra (8).

13. Dispositif de retenue conforme à l'une des revendications 5 à 12,
dans lequel le bras porteur (6, 6', 6", 60, 60', 60", 62, 62', 62") et l'élément d'enfichage (5b) sont susceptibles de pivoter l'un sur l'autre autour de l'axe de rotation Z2 de la première articulation tournante (6a) dans une position de stockage peu encombrante.

14. Dispositif de retenue conforme à l'une des revendications précédentes, dans lequel les articulations doubles (6c, 6d, 60a, 60b, 60c, 10) sont formées par des articulations sphériques.
